# EUROPEAN PATENT APPLICATION

(11) **EP 2 063 650 A1**
(43) Date of publication of application: **27.05.2009**
(21) Application number: 07022900.0
(22) Date of filing: 26.11.2007
(51) Int. Cl.: H04Q 3/00

(54) **Method, apparatus and computer program product for trigger routing in a distributed mobile intelligent network service environment**

(71) Applicant: Nokia Siemens Networks Oy, 02610 Espoo (FI)
(72) Inventor: Reininghaus, Georg, 1130 Wien (AT)
(74) Representative: Bruglachner, Thomas E.

(57) **Abstract**

The present invention refers to a method, an apparatus and a computer program product for trigger routing in a distributed mobile intelligent network service environment, wherein subscriber data comprising a subscription information data set are provided (S2), an availability of a service capability feature address in the subscription information data set is determined (S3), a mobile switching center address is mapped to an area identifier, if no service capability feature address is available (S4), the area identifier is mapped to a destination address (S5), the destination address is inserted into the subscriber information data set (S6) and an IN-trigger is setup towards the destination address (S7).

## Description

The present invention relates generally to a method, an apparatus and a computer program product for trigger routing in a distributed mobile intelligent network service environment and, more particularly, to a method, an apparatus and a computer program product for an optimized trigger routing in a distributed CAMEL (Customized Application for Mobile Enhanced Logic) service environment as defined by 3GPP (third Generation Partnership Project).

Third Generation Wireless Networks are expected to enable the Mobile Internet to become a reality, offering fast internet access and high-speed data services to mobile subscribers. In order for network operators to allow for the rapid development of innovative value added applications on the scale seen in the Internet today, the wireless core network needs to be opened for third party applications provided by e.g. independent software vendors. The Third Generation Partnership Project (3GPP) is currently working on the production of technical specifications to provide a mechanism that would permit independent software vendors a standard interface to access network traditionally available to network operators themselves. Within 3GPP, this mechanism is commonly referred to as the Open Service Access (OSA). This Open Service Access is predominantly targeted at UMTS (Universal Mobile Telecommunications Networks) networks, allowing application developers to access the feature-rich core network capabilities.

The Open Service Access GateWay (OSA GW) has proprietary interfaces towards a CAMEL Service Environment (CSE), or a CAMEL Service Control Point (SCP) or e.g. a Wireless Intelligent Network (WIN) Service Control Point.

The Open Service Access provides application developers with an abstraction of the functionality that resides within the core network. The abstraction is obtained by defining the core network functionality in terms of what is referred to in the following as Service Capability Features (SCFs) which should be considered as technology independent building blocks that are accessible via standardized interfaces. They represent the basic functionality that is available within the network. Examples of Service Capability Features include e.g. "call control", "user location" and "user interaction" and are supported in a network operator's domain through Service Control Servers (SCS). The user interaction Service Capability Feature can, for instance, be supported on a gateway (GW) or on the Home Location Register (HLR) while the call control Service Capability Feature can be supported by the CAMEL Service Environment (CSE). The applications themselves are executed on application servers, which may reside outside or inside the network operator domain.

According to the present invention a public land mobile network (PLMN) including a CAMEL Service Environment (CSE) as defined by 3GPP may be provided. The PLMN and interworking with the CAMEL Service Environment is specified by European Telecommunication Standards Institute (ETSI).

With progress in computer technology, an IN-system (Intelligent Network), respectively a CAMEL Service Environment (CSE), develops from a monolithic architecture towards a distributed architecture. The present invention specifically focuses on the trigger mechanism with a monolithic architecture and a distributed architecture.

In a monolithic CAMEL service environment the service control point (SCP) hosts the application and a data base (DB), containing all subscriber and application data. This configuration provides a single service control point address for triggering from the mobile switching center (MSC).

In a distributed CAMEL service environment the data base is separated from the service control point. In detail, several service control points hosting identical applications may be served by a common data base system. This configuration provides several SCP addresses, i.e. one address per service control point, for triggering.

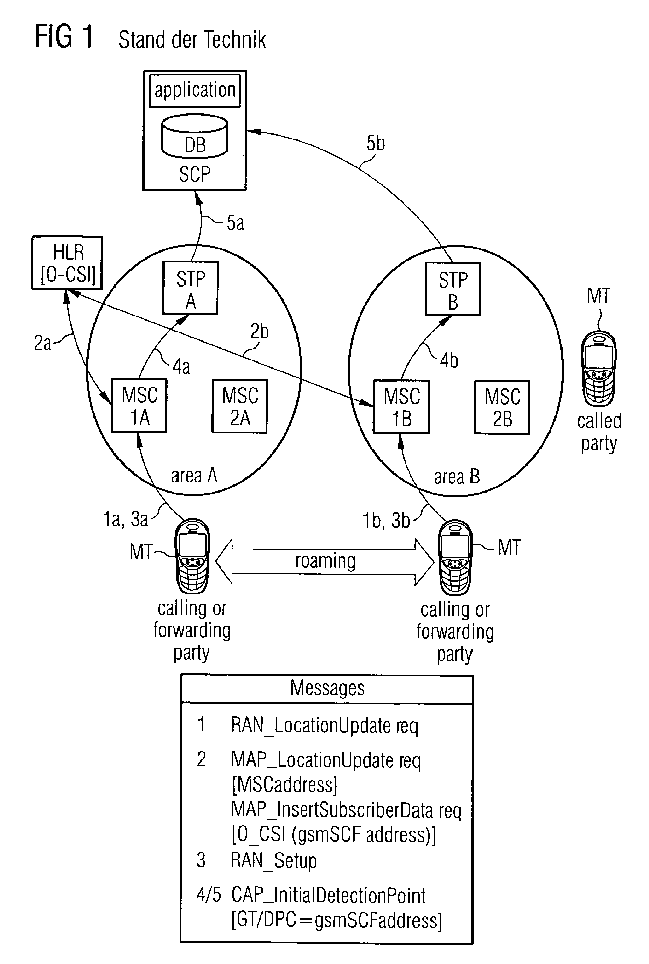

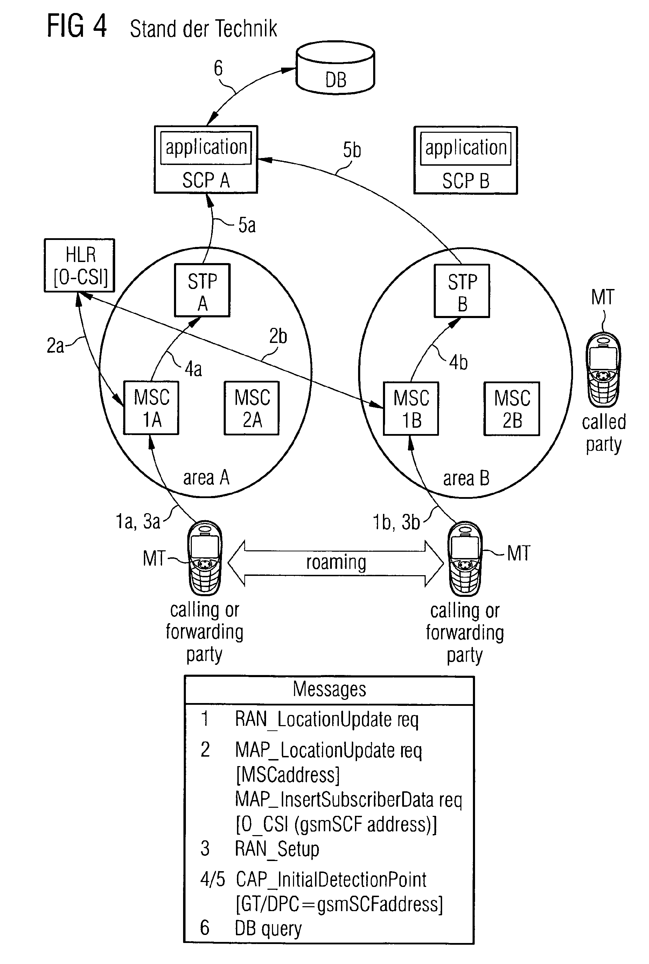

The CAMEL trigger mechanism currently defined by 3GPP does not consider advantages of such a distributed architecture. It always triggers the same service control point and, thus, does not support any optimization. Figure 1 to 3 illustrate a simplified block diagram of a conventional trigger routing within a monolithic architecture, while Figure 4 to 6 illustrate a simplified block diagram of a conventional trigger routing within a distributed architecture.

According to Figure 1 a scenario for a mobile originating call (MOC) and control function (CF) trigger at a visited mobile switching center MSC within a monolithic architecture is shown. In detail, the scenario according to Figure 1 covers an O-CSI (originating CAMEL subscription information) triggered call due to Mobile Originating Call (MOC) and late CF. It is based on the current solution with a monolithic CAMEL service environment, i.e. a single service control point architecture. In this scenario the calling and/or redirecting party is provided with a O-CSI trigger for MOC and/or CF. The called party may be of any kind (mobile terminal, fixed terminal, etc.), and is not of specific relevance for this scenario.

When a mobile telephone registers locally at the mobile switching center MSC 1A via the radio network, the home location register HLR is automatically queried with a location update request (see messages 1a and 2a). The home location register HLR will respond with the calling/redirecting party's subscription data submitted for local storage at the mobile switching center. Note that the data include the O-CSI for MOC and/or CF.

When the calling party subsequently sets up an MOC, the calling party's subscription data are checked by the mobile switching center MSC 1A (after message 3a). Due to the O-CSI the mobile switching center will prepare a trigger towards the service control point SCP including a data base DB and a respective application. The destination of the triggering message is determined by the (so called) gsmSCF_address contained in the O-CSI data set. With this address the trigger is routed from the mobile switching center MSC 1A via a signaling transfer point STP A towards the service control point SCP (messages 4a and 5a). The service control point SCP may subsequently decide to continue call setup towards the B-party (not shown in Figure 1).

When the calling party, e.g. mobile telephone MT, changes position from area A to area B (e.g. due to roaming) the calling party may register at mobile switching center MSC 1B. The location update (messages 1b and 2b) and mobile originating call (MOC setup and the trigger procedure messages 3b, 4b and 5b) are similar to the respective procedures in the area A.

The scenario in case of late CF is quite similar. The location update procedure is the same as described before but the call is received by the redirecting party and forwarded towards the called party. The trigger mechanism remains unchanged.

Note that irrespective of the area A or B always the same physical service control point SCP is triggered. Even if this mechanism enables a well proven trigger routing in a monolithic intelligent network service environment there exists the drawback of a suboptimal routing, i.e. waste of resources and thus increasing run time delay and costs.

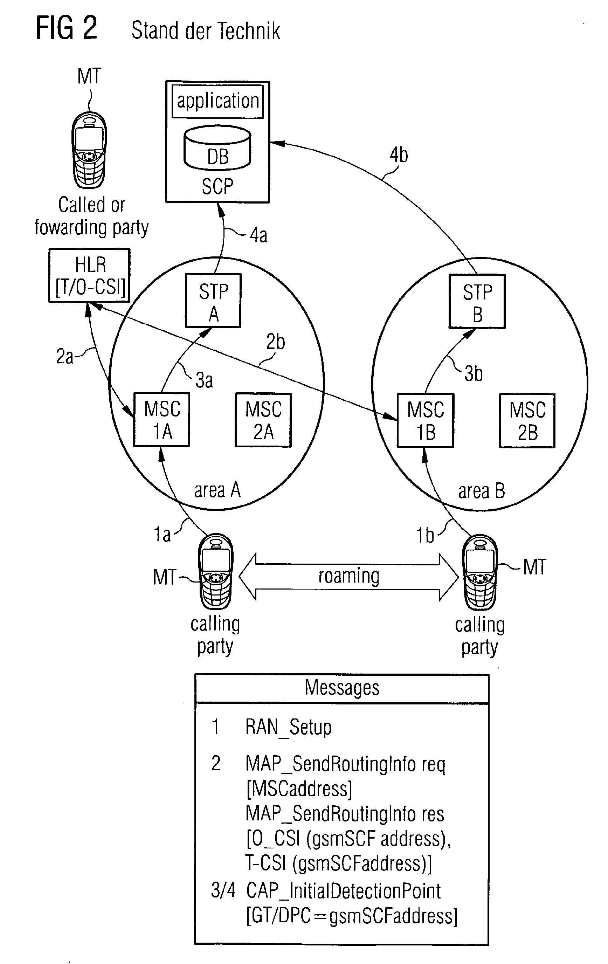

Figure 2 illustrates a simplified block diagram of a conventional mobile terminating call- (MTC) and CF-trigger at a gateway mobile switching center within a monolithic architecture, wherein same reference signs define same or similar elements as in Figure 1. In detail, Figure 2 describes a scenario covering T-CSI triggered calls due to MTC and O-CSI triggered early CF. It is based on the current solution within a monolithic CAMEL service environment (CSE), i.e. a single service control point architecture. In these scenarios the called and/or redirecting party is provided with the T-CSI for MTC, respectively O-CSI, for early CF. The calling party may be again of any kind, i.e. mobile, fixed or other terminal equipment, and is not of specific relevance for this scenario. In Figure 2 mobile access of the calling party is assumed.

When the calling party, e.g. mobile telephone MT, dials the called party number the interrogating mobile switching center MSC 1A automatically queries the home location register HLR with a "send routing information request" (see messages 1a and 2b). The home location register HLR will respond with the called/redirecting party's call data submitted for local treatment at the mobile switching center. Note that the data include the T-CSI for MTC and/or O-CSI for early CF. The called/redirecting party's call data are checked by the mobile switching center (after message 2a). Due to the T-CSI, respectively O-CSI, the mobile switching center will prepare a trigger toward the service control point SCP hosting data base DB and application. The destination of the triggering message is determined by the gsmSCF_address contained in the T-CSI, respectively O-CSI, data set. With this address the trigger is routed from the mobile switching center MSC 1A via the signaling transfer point STP A towards the service control point SCP (see messages 3a and 4a). The service control point SCP may subsequently decide to continue call setup towards the B-party (not shown in Figure 2).

When the mobile calling party, e.g. mobile telephone MT, changes position from area A to area B (e.g. roaming), the trigger is handled by the interrogating mobile switching center MSC 1B. The call procedure (messages 1b and 2b) and the trigger procedure (messages 3b and 4b) are similar compared to the respective procedures in area A.

The only difference between the MTC and early CF case is, that T-CSI, respectively O-CSI, is used for the trigger and a subsequent connection towards the called party is considered as roaming, respectively forwarding, leg. In view of the fact that irrespective of the area always the same physical service control point SCP is triggered which may result in a suboptimal trigger routing, i.e. waste of resources and thus increasing run time delay and costs.

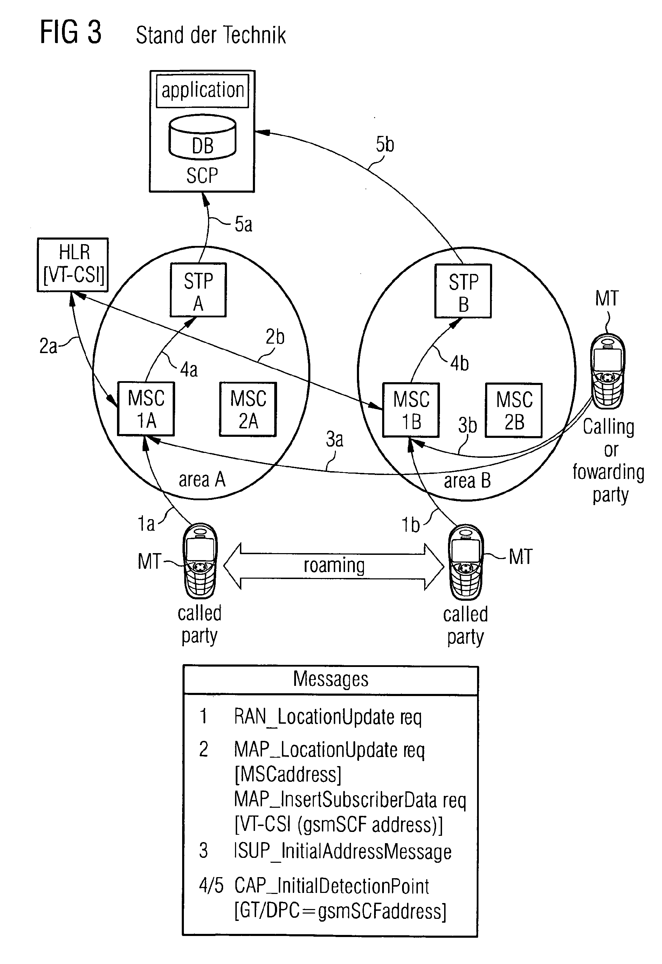

Moreover, Figure 3 illustrates a simplified block diagram for a conventional MTC-trigger at a visited mobile switching center within a monolithic architecture, wherein same reference signs define same or similar elements as in Figures 1 and 2. The scenario according to Figure 3 covers VT-CSI (Visited Terminating CSI) triggered calls due to MTC (Mobile Terminating Call). It is based on the current solution within a monolithic CAMEL service environment (CSE), i.e. a single service control point architecture. In these scenarios the called party is provided with the VT-CSI trigger for MTC. The calling party may be again of any kind, i.e. mobile, fixed, etc., and is not of specific relevance for this scenario.

When a mobile telephone MT registers locally at the mobile switching center MSC 1A via the radio network, the home location register HLR is automatically queried with the location update request (see messages 1a and 2a). The home location register HLR will respond with the called party's subscription data submitted for local storage at the MSC. Note that the data include the VT-CSI for MTC.

When the calling/forwarding party subsequently dials/forwards to the number of the above-mentioned mobile telephone, the roaming, respectively forwarding, leg is connected to the visited mobile switching center MSC 1A. The called, respectively forwarded-to, party's subscription data are checked by the mobile switching center (see message 3a). Due to the VT-CSI the mobile switching center will prepare a trigger towards the service control point SCP. The destination of the triggering message is determined by the gsmSCF_address contained in the VT-CSI data set. With this address the trigger is routed from a mobile switching center MSC 1A via the signaling transfer point STP A towards the service control point SCP (see messages 4a and 5a). The service control point SCP includes a data base DB and an application and may subsequently decide to continue call setup towards the B-party (not shown in Figure 3).

When the called, respectively forwarded-to, party, e.g. mobile telephone MT, changes position from area A to area B (roaming), the party may register at the mobile switching center MSC 1B. The location update (see messages 1b and 2b) and MOC setup as well as trigger procedure (messages 3b, 4b and 5b) are again identical compared to area A.

Also in this case, since irrespective of the area A or B always the same physical service control point SCP is triggered, this conventional trigger routing is suboptimal, i.e. waste of resources and thus increasing run time delay and costs.

Figure 4 illustrates a simplified block diagram or a conventional trigger routing of a MOC- and a CF-trigger at a visited mobile switching center within a distributed architecture. The scenario according to Figure 4 is very similar as described in Figure 1, for which reason it is referred to the description of Figure 1 at this point.

Only the messages 5 and 6 need a special consideration. In the distributed architecture according to Figure 4, two or more service control points SCP A and SCP B share a single centralized data base DB. However, a home location register HLR holds only a single gsmSCF_address per trigger (MOC O-CSI and CF O-CSI). For this reason irrespective of the calling respectively forwarding party location (area A or B), the trigger will always be routed towards the same service control point SCP A (see messages 5a and 5b). The service control point SCP A finally queries the central data base DB for application and subscriber data required to continue the call (message 6).

Even though a trigger routing can be enabled in a distributed mobile intelligent network service environment (e.g. CSE) the signaling is still suboptimal trigger routing, i.e. waste of resources, run time delay and increased costs.

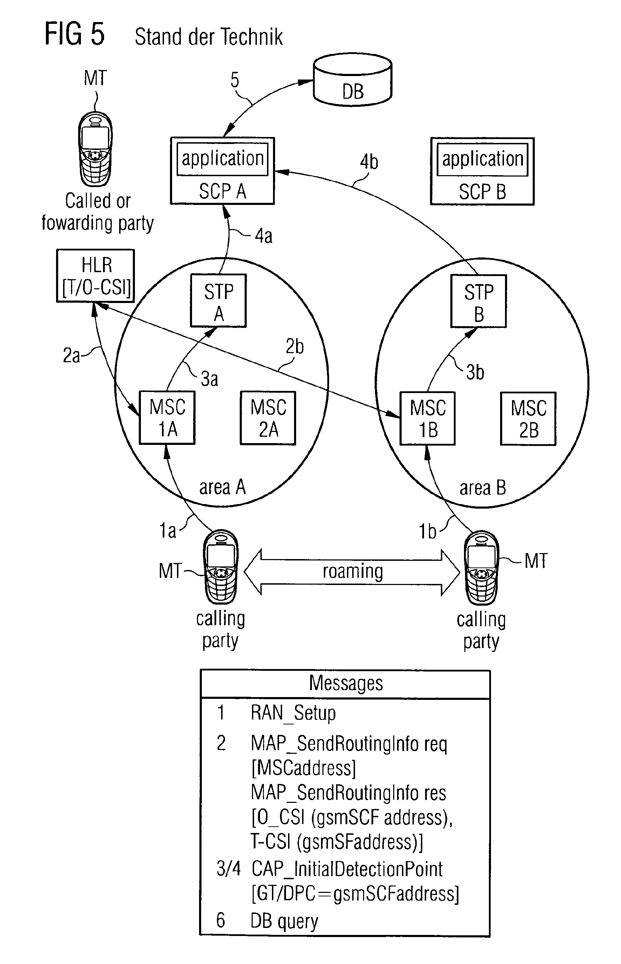

Figure 5 illustrates a simplified block diagram of a conventional trigger routing for MTC- and CF-trigger at a gateway mobile switching center within a distributed architecture. The scenario described according to Figure 5 is again very similar to the scenario described already in Figure 2, for which reason it is referred to the respective description.

Only the messages 4 and 5 need a special consideration. In detail, in a distributed architecture according to Figure 5 again two or more service control points SCP A and SCP B share a single centralized data base DB. The home location register HLR holds only a single gsmSCF_address per trigger (MTC T-CSI and CF O-CSI). For this reason irrespective of the calling party location, i.e. whether it is in area A or area B, the trigger will always be routed towards the same service control point SCP A (see messages 4a and 4b). The service control point SCP A finally queries the central data base DB for application and subscriber data required to continue the call (see message 5). Again a respective trigger routing is suboptimal, i.e. waste of resources and thus increasing run time delay and costs.

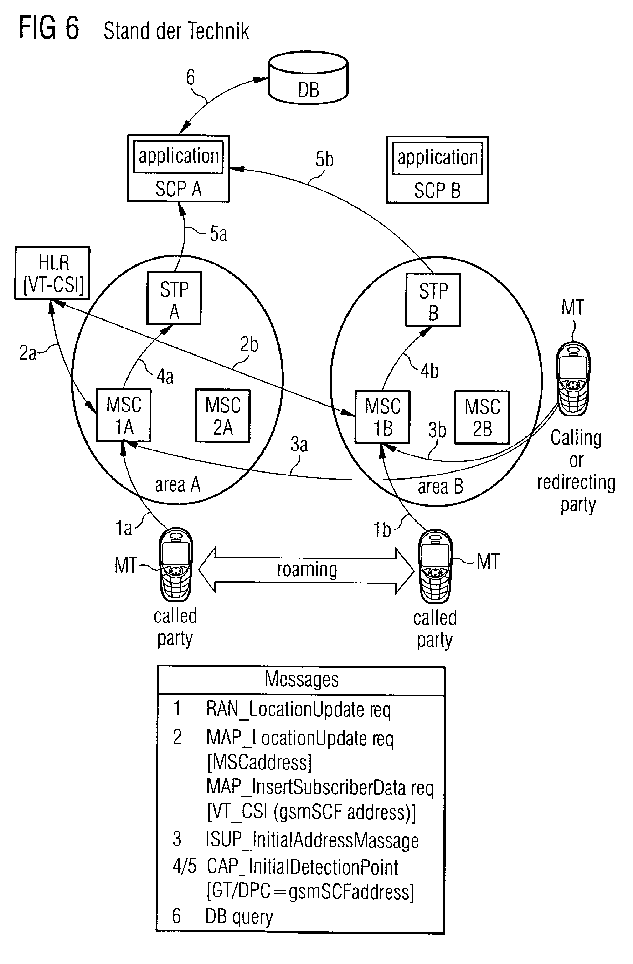

Finally, Figure 6 illustrates a simplified block diagram of a conventional trigger routing for an MTC- and CF-trigger at the visited mobile switching center within a distributed architecture. The scenario according to Figure 6 is very similar to the scenario according to Figure 3, for which reason a reiteration of a respective description is omitted in the following.

Only the messages 5 and 6 need again a special consideration. In detail, in a distributed architecture according to Figure 6 again two or more service control points SCP A and SCP B share a single centralized data base DB. The home location register holds again only a single gsmSCF_address per trigger (MTC VT-CSI). For this reason, irrespective of the called party location (area A or B) the trigger will always be routed towards the same service control point SCP A (see message 5a and 5b). The service control point SCP A finally queries the central data base DB for application and subscriber data required to continue the call (message 6).

Thus, the conventional IN-trigger routing is suboptimal; i.e. waste of resources and thus increasing run time delay and costs.

It is, therefore, a need in the art to provide a method, an apparatus and a computer program product for an optimized trigger routing in a distributed mobile intelligent network service environment.

According to an embodiment of the present invention there is provided a method for trigger routing in a distributed mobile intelligent network service environment comprising the steps of: providing of subscriber data comprising a subscription information data set, determining an availability of a service capability feature address in said subscription information data set, mapping a mobile switching center address to an area identifier, if no service capability feature address is available, mapping said area identifier to a destination address, inserting said destination address into said subscription information data set, and setting up an IN-trigger towards said destination address.

According to a further embodiment of the present invention there is provided an apparatus for trigger routing in a distributed mobile intelligent network service environment comprising: determining means for determining the availability of a service capability feature address in a subscription information data set, first mapping means for mapping a mobile switching center address to an area identifier, if no service capability feature address is available, second mapping means for mapping said area identifier to a destination address; and insertion means for inserting said destination address into said subscription information data set, wherein an IN-trigger is set up towards said destination address.

Moreover, according to the present invention there is provided a computer program product for performing the above-mentioned method steps.

The invention provides the following advantages, in particular, when combined with a distributed CAMEL service environment (CSE):
Routing of IN-triggers can be optimized by triggering the service control point closest to the area hosting the triggering mobile switching center, respectively the location of the calling mobile subscriber.

The solution works for a number of CAMEL subscription information (CSI) types, i.e. O-CSI (originating CSI, wherein MOC and CF trigger are at the visited mobile switching center), T-CSI (terminating CSI, wherein MTC trigger is at the gateway mobile switching center), VT-CSI (visited terminating CSI, wherein MTC trigger is at the visited mobile switching center), D-CSI (wherein a dialed trigger is at the visited mobile switching center), SMS-MO-CSI (wherein an SMS-MO trigger is at the visited MSC), etc. In principle it may be applied to any CSI type transferred between a home location register and a network node constituting a mobile switching center functionality.

Moreover, it is possible to address different service control points individually per respective CSI-types.

There exists also the possibility, that in case a service control point goes out of operation (e.g. due to maintenance) a corresponding destination address, e.g. gsmSCF_address, can be replaced by a different one within the mapping tables. This can be realized by a simple change at a central system (e.g. home location register HLR). Moreover, it would not be noticed by the users of the respective CAMEL service environment applications.

The implementation of the present invention is very simple and requires only an extension on the central home location register. There is no impact on the distributed mobile switching centers. Consequently, the solution is also supported in a mobile switching center multi-vendor-environment and in case of international mobile subscriber roaming.

Moreover, the present invention enables the use of a standard trigger mechanism for applications requiring a trigger of a specific service control point, by inserting the respective gsmSCF_address into a respective CSI data set at the home location register. Thus, the present invention enables the use of standard and enhanced trigger mechanisms individually per application, trigger and subscriber.

Moreover, the present invention is backward compatible to the currently standardized solution. In detail, standardized and new solutions will be supported simultaneously. Thus, smooth role out of the new mechanism with very little impact on life network operation is possible.

The foregoing has outlined rather broadly the features and technical advantages of embodiments of the present invention in order that the detailed description of the invention that follows may be better understood. Additional features and advantages of embodiments of the invention will be described hereinafter, which form the subject of the claims of the invention. It should be appreciated by those skilled in the art that the conception and specific embodiments disclosed may be readily utilized as a basis for modifying or designing other structures or processes for carrying out the same purposes of the present invention. It should also be realized by those skilled in the art that such equivalent constructions do not depart from the spirit and scope of the invention as set forth in the appended claims.

For a more complete understanding of the present invention and the advantages thereof, reference is now made to the following description taken in conjunction with the accompanying drawings in which:
Figures 1 to 3 illustrate a simplified block diagram for a prior art trigger routing in a monolithic mobile intelligent network service environment;
Figures 4 to 6 illustrate a simplified block diagram for a prior art trigger routing in a distributed mobile intelligent network service environment;
Figure 7 illustrates a simplified block diagram for a trigger routing in a distributed mobile intelligent network service environment according to a first embodiment of the present invention;
Figure 8 illustrates a simplified block diagram for trigger routing in a distributed mobile intelligent network service environment according to a second embodiment of the present invention;
Figure 9 illustrates a simplified block diagram for trigger routing in a distributed mobile network service environment according to a third embodiment of the present invention;
Figure 10 illustrates a simplified structure of the mapping tables used in the present invention;
Figure 11 illustrates a simplified flowchart showing method steps for trigger routing according to the present invention; and
Figure 12 illustrates a simplified flowchart showing method steps for trigger routing according to a further embodiment of the present invention.

The making and using of the presently preferred embodiments are discussed in detail below. It should be appreciated, however, that the present invention provides many applicable inventive concepts that can be embodied in a wide variety of specific contexts. The specific embodiments discussed are merely illustrative of specific way to make and use the invention, and do not limit the scope of the invention.

The present invention will be described with respect to preferred embodiments in a specific context, namely optimized trigger routing in a CAMEL (Customized Application for a Mobile Enhanced Logic) Service Environment (CSE) using gsmSCF_addresses as destination addresses for a respective Service Control Point SCP. The invention may also be applied, however, to other distributed mobile intelligent network service environments and any proprietary intelligent network solutions, provided the trigger mechanism is based on similar subscription information data sets as the described CAMEL Subscription Information (CSI).

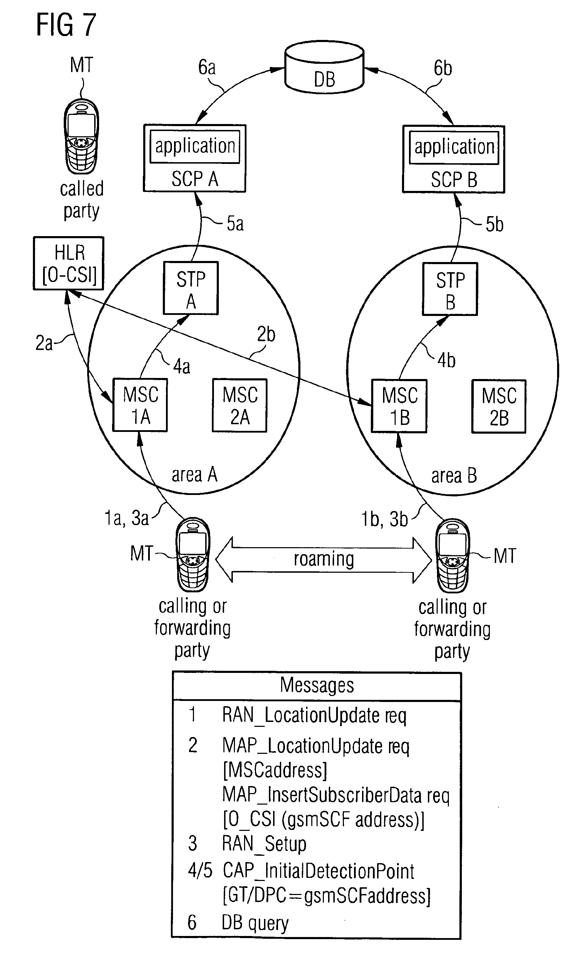

Figure 7 illustrates a simplified block diagram for a trigger routing in a CAMEL service environment according to a first embodiment of the present invention, wherein same reference signs define same or similar elements as in Figures 1 to 6.

In detail, according to Figure 7 an optimized trigger routing for an MOC- (Mobile Originating Call) and CF-trigger at a visited mobile switching center is shown within a distributed architecture. Since this scenario according to Figure 7 is very similar to the scenario according to Figure 4, it is referred to the respective description thereof.

According to the first embodiment of the present invention only some details of messages 2 to 6 need special consideration. In detail, the home location register HLR is enhanced with a mechanism to select the final destination address, e.g. gsmSCF_address, depending on the visited mobile switching center's address or geographical location information, i.e. the address of the mobile switching center MSC 1A or MSC 1B. For this reason, the mobile switching center MSC 1A and MSC 1B will receive different area dependent destination addresses, i.e. gsmSCF_address values, in the messages 2a and 2b depending on the location of the calling mobile telephone MT (i.e. a respective mobile switching center MSC 1A or MSC 1B). Consequently, the trigger is routed either to a service control point SCP A or to a service control point SCP B depending on the calling, respectively forwarding, party's location (messages 4 and 5). The respectively selected service control point SCP A or SCP B finally queries the central data base DB for application and subscriber data required to continue the call by the messages 6a or 6b.

Note that the completion of the call setup towards the called party is of no relevance in this scenario and, therefore, not shown.

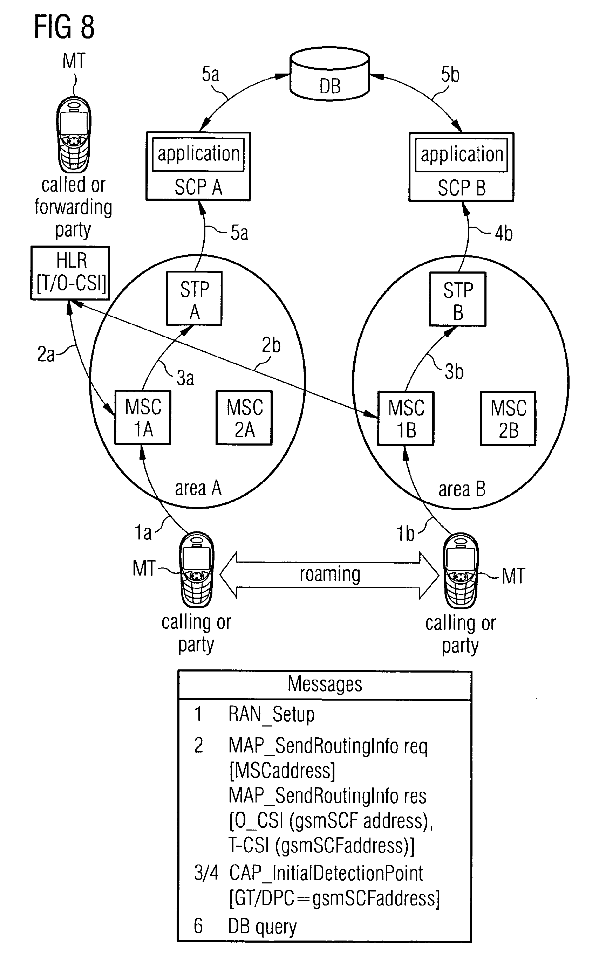

Figure 8 illustrates a simplified block diagram for a trigger routing in a distributed CAMEL service environment according to a second embodiment of the present invention, wherein same reference signs refer to same elements or messages as in Figures 1 to 7.

According to Figure 8 an optimized trigger routing for MTC-(Mobile Terminating Call) and CF-trigger at a gateway mobile switching center is shown within a distributed architecture. Since this scenario according to Figure 8 is very similar to the scenario according to Figure 5 it is referred to the respective description thereof.

The second embodiment of the present invention needs a special consideration only with respect to some details in messages 2 to 5. In detail, the home location register HLR is enhanced with a mechanism to select the destination address, e.g. gsmSCF_address, depending on the triggering mobile switching circuit address or geographical location information, i.e. address of mobile switching center MSC 1A or MSC 1B. For this reason the mobile switching centers MSC 1A and MSC 1B will receive different destination addresses (e.g. gsmSCF_address values) in the respective messages 2a and 2b. Consequently, the trigger is routed either to the service control point SCP A or to the service control point SCP B depending on the calling, respectively forwarding, party's location (see messages 3 and 4). The selected service control point finally queries the central data base DB for application and subscriber data required to continue the call (see message 5).

Again it should be noted that the completion of the call setup towards the called party is of no relevance in this scenario and, therefore, not shown.

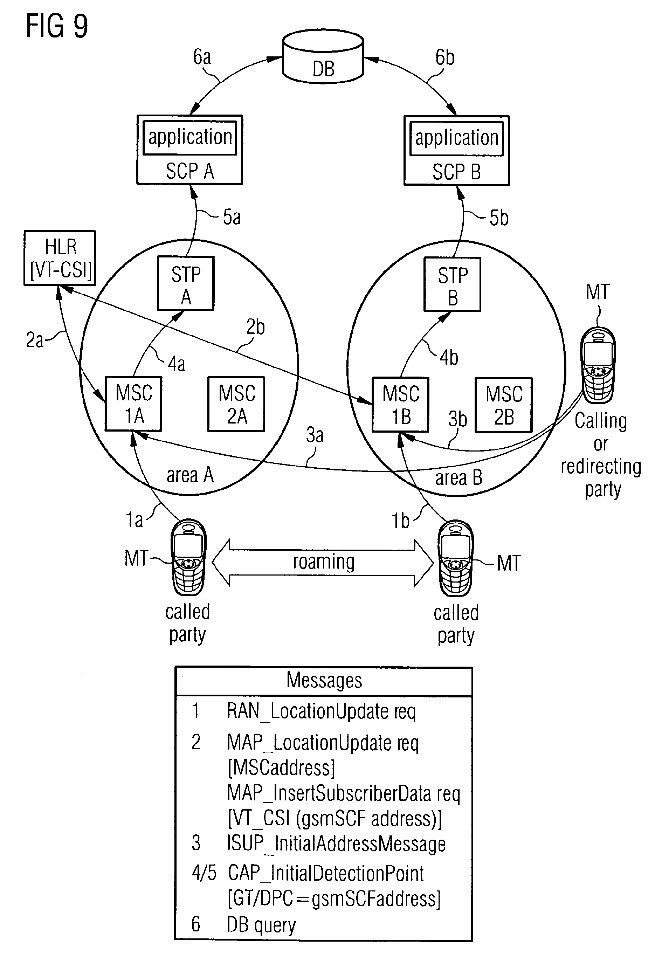

Figure 9 illustrates a simplified block diagram for optimized trigger routing in a distributed CAMEL service environment according to a third embodiment of the present invention, wherein same reference signs define same or similar functional blocks or messages as described in Figures 1 to 8.

According to the optimized trigger routing of Figure 9 an MTC-trigger (Mobile Terminating Call) at a visited mobile switching center is shown within a distributed architecture. As the scenario described in Figure 8 is very similar to the scenario according to Figure 5, a respective reiteration of the description is omitted in the following.

According to the third embodiment of the present invention only some details of messages 2 to 6 need special consideration. In detail, the home location register HLR is enhanced with a mechanism to select the destination address for the trigger, e.g. gsmSCF_address, depending on the triggering mobile switching center's address or geographical location information, i.e. address of MSC 1A or MSC 1B. For this reason, the mobile switching center MSC 1A and MSC 1B will receive different destination addresses, e.g. gsmSCF_address values, within the messages 2a and 2b. Consequently, the trigger is routed either to the service control point SCP A or to the service control point SCP B depending on the calling, respectively forwarding, party's location (see messages 4 and 5). The respectively selected service control point finally queries the central data base DB for application and subscriber data required to continue the call as shown by messages 6a or 6b. Again, please note that a completion of the call setup towards the called party MT is of no relevance in this scenario and, therefore, not shown.

In the following the implementation of the present invention at the home location register HLR is discussed in detail. According to the present invention a request at the home location register HLR provides a subscription information data set, e.g. CSI data set, per trigger type and subscriber. According to the standard each subscription information data set contains one destination address field, i.e. gsmSCF_address field, containing the address value of a respective service control point SCP. To support a more flexible and optimized routing the present invention may be realized by additional mapping tables, which may be located in the home location register HLR.

To make the optimized IN-trigger routing more flexible the standard address field for the destination address, e.g. gsmSCF_address, within the subscription information data set (e.g. CSI) is kept empty. Instead, the destination address (gsmSCF_address) is determined via at least one mapping table.

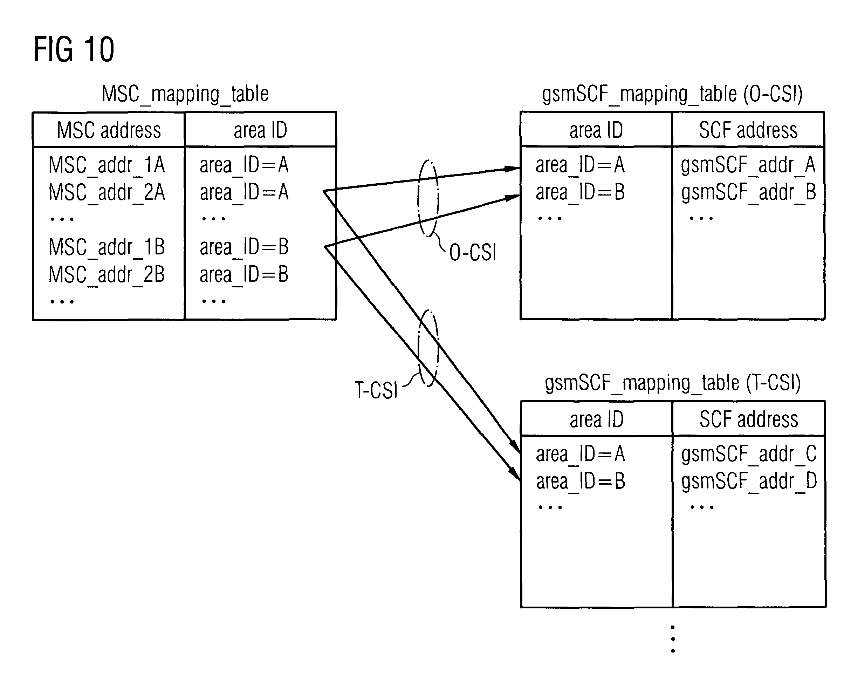

Figure 10 illustrates a simplified structure of respective mapping tables and mapping rules according to the present invention. Input parameter is the serving or gateway mobile switching center MSC address received with the interrogating message 2 (e.g. MAP_SendRoutingInfo or MAP_LocationUpdate request). In Figure 10 a MSC_mapping_table with input of e.g. "MSC_addr" delivers a corresponding area identifier "area_ID" value. If this parameter is forwarded to the respective destination mapping table "gsmSCF_mapping_table" according to Figure 10 the final result is the value of the destination address (e.g. gsmSCF_address). To enable individual treatment per respective subscription information types (CSI types) each subscription information type may have a corresponding instance of the "gsmSCF_mapping_table".

According to Figure 10 an example of a set of mapping tables and mapping rules is provided. It is assumed that O-CSI (originating CSI) and T-CSI (terminating CSI) is supported only. Of course, this example may be extended with additional "gsmSCF_mapping_tables" as required, e.g. for VT-CSI (visited terminating CSI), D-CSI, SMS-MO-CSI, etc.

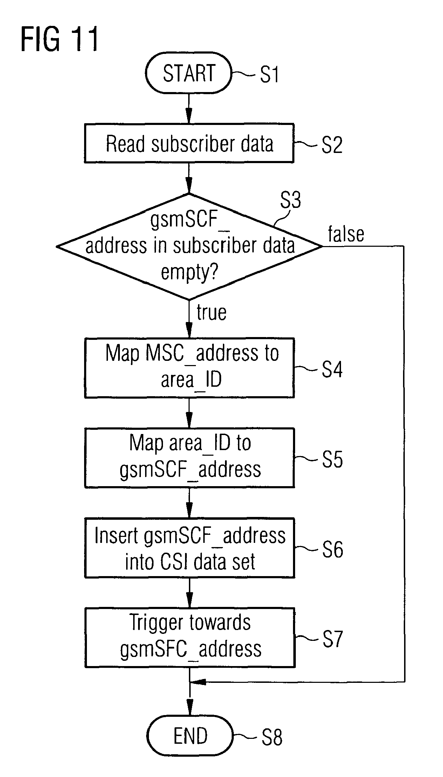

Figure 11 illustrates a simplified flowchart showing the method steps for optimized trigger routing in a distributed CAMEL service environment according to the present invention.

In detail, after a start in step S1 the subscriber data are provided in a step S2 wherein the subscriber data comprise a subscription information data set, such as CSI data set. Thus, the subscriber data may be read from the home location register HLR, when the home location register HLR receives e.g. a location update request ("MAP_LocationUpdate") for routing information. The subscriber data may be fetched from a (not shown) home location register data base and prepared for transfer towards the requesting mobile switching center MSC.

In step S3 the home location register HLR may check or determine the availability of a service capability feature address in the subscription information data set. In detail, it is checked whether e.g. the "gsmSCF_address" field in the CSI data set is empty or not.

In case no service capability feature address is available in the subscription information data set the method proceeds to step S4 wherein a mobile switching center address MSC address is mapped to an area identifier "area_ID". In step S5 further mapping tables "gsmSCF_mapping_table" may be used for mapping said area identifier "area_ID" to a respective destination address. In detail, depending on the type of subscription information a respective mapping table is selected and a respective destination address for a service control point SCP is mapped to the selected area identifier (see Figure 10). In a step S6 the destination address is inserted into the respective field of the subscription information data set and the setup of the trigger towards the determined destination address is performed according to standard procedures. The method ends in a step S8. In case step S3 does not determine an empty service capability feature address (e.g. "gsmSCF_address") field the home location register HLR will directly proceed to step S7 and applies e.g. 3GPP standard procedures.

According to the present invention the provision of subscriber data in step S2 may include the reading of these data from the home location register HLR directly or by receiving them via the so-called Mobile Application Part (MAP). As already discussed the subscription information data set may be of an O-CSI-, T-CSI-, VT-CSI- or any other CSI-types. Moreover, the mobile switching center address may be a gateway or a serving mobile switching center address. In particular, a location information received from the mobile switching center address is used to determine the respective area identifier "area_ID" of the first mapping table "MSC_mapping_table".

Even if the present invention will be preferably implemented in the home location register HLR it may be also located at any other location or node within the telecommunications network.

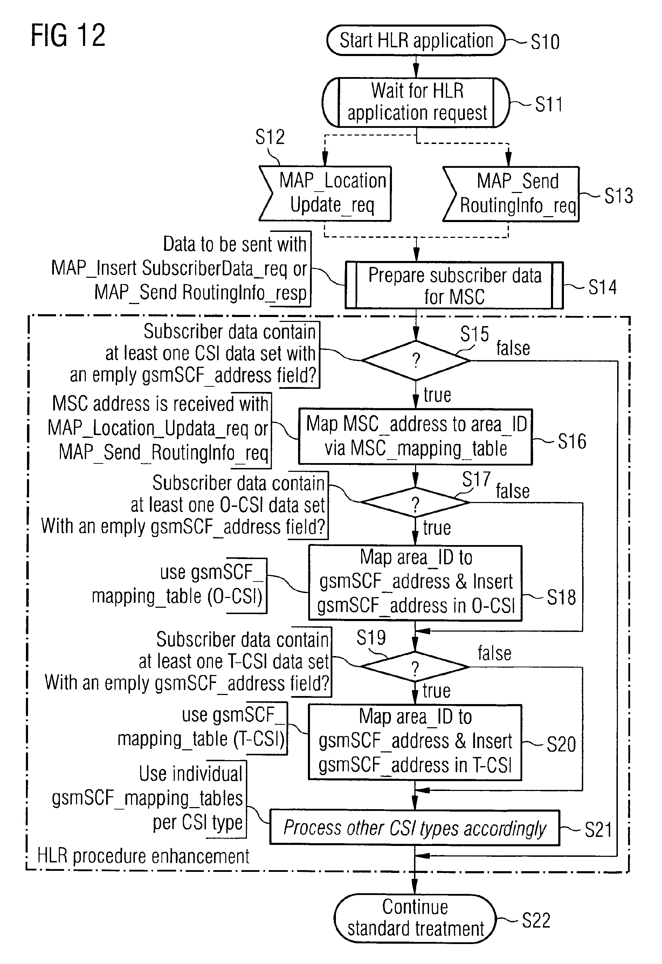

Figure 12 illustrates a simplified flowchart according to a further embodiment of the present invention, wherein similar method steps may refer to similar method steps of Figure 11.

According to Figure 12 the method may be implemented again in a home location register HLR and started in a step S10. In a step S11 a method waits for a home location register application request. When the home location register HLR receives a respective location update to request e.g. "MAP_LocationUpdate_req" in step S12 or a request for routing information, e.g. "MAP_SendRoutingInfo_req", in step S13, the subscriber data are fetched from the home location register data base (not shown) and prepared for transfer towards the requesting mobile switching circuit MSC in step S14. The respective messages are shown in Figure 12 on the left side. The method steps relevant to the present invention are shown in Figure 12 by the dotted line in the respective home location register enhancements.

In detail, in a step S15 the home location register HLR checks whether there is at least one CSI data set for the given subscriber with an empty "gsmSCF_address" field. If not, the home location register HLR will apply e.g. 3GPP standard procedures and proceed to step S22. Otherwise the home location register will treat the CSI-types or CSI data sets one by one. In detail, in case the respective data set has an empty "gsmSCF_address" field, the mapping tables according to Figure 10 may be used to determine the respective parameters. The final destination address value, i.e. SCF address, (gsmSCF_address value) found will be inserted into the respective CSI-field of the subscriber data set for submission to the mobile switching center MSC.

Thus, in step S16 the MSC address is mapped to a respective area identifier via the MSC_mapping table shown in Figure 10. In step S17 it may be checked whether the subscriber data contain at least one O-CSI data set with an empty "gsmSCF_address" field. If there exists an empty address field the method proceeds to step S18 and determines the respective destination address ("gsmSCF_address") of the respective O-CSI mapping table according to Figure 10 and inserts this address to the respective address field in O-CSI. In a step S19 it may be checked whether subscriber data contain at least one T-CSI data set with an empty "gsmSCF_address" field. The method proceeds to a step S20 if there is no such "gsmSCF_address" available and uses the respective T-CSI-mapping table for mapping the respective area identifier to a corresponding destination address ("gsmSCF_address"). In case the subscriber data do not contain a respective O-CSI or T-CSI data set the respective mapping tables are not used and the method proceeds to a step S21 where other CSI types may be processed accordingly. The method ends in a step S22 where a standard treatment is continued e.g. according to 3GPP.

Thus, when all possible CSI data sets are processed, the standard 3GPP procedures may be continued and the subscriber data set including the respective "gsmSCF_address" values are sent towards the mobile switching center for triggering purposes.

According to the present invention 3GPP standard procedures as well as enhanced procedures according to the present invention using mapping tables may be used to determine a respective destination address, i.e. "gsmSCF_address". Thus, the configuration can be done individually per CSI type and subscriber.

Figures 11 and 12 illustrate flowcharts of a method and computer program product according to the present invention. It will be understood that each block or step of the flowchart and combinations of blocks in the flowchart can be implemented by computer program instructions. These computer program instructions may be loaded onto a computer or another programmable apparatus to produce a machine, such that the instructions which are executed on the computer or other programmable apparatus create means for implementing the function specified in the blocks or steps of the flowchart. These computer program instructions may also be stored in a computer readable memory, e.g. DVD, CD, or diskette, that can direct a computer or other programmable apparatus to function in a particular manner. Moreover, these computer program instructions may be downloaded in e.g. a telecommunications network to cause operational steps to be performed on the computer or other programmable apparatus to produce a computer implemented process such that the instructions which execute on the computer or other programmable apparatus provide steps for implementing the functions specified in the blocks or steps of the flowchart.

Accordingly, blocks or steps of the flowchart support combinations of means for performing the specified functions, combinations of steps for performing the specified functions and program instruction means for performing the specified functions. It will also be understood that each block or step of the flowchart and combinations of blocks or steps in the flowchart can be implemented by special purpose hardware based computer systems which perform the specified function or steps or combinations of the special purpose hardware and computer instructions.

Although embodiments of the present invention and their advantages have been described in detail, it should be understood that various changes, substitutions and alterations can be made therein without departing from the spirit and scope of the invention as defined by the appended claims. For example, it will be readily understood by those skilled in the art that many of the features, functions, processes and methods described herein may be varied while remaining within the scope of the present invention. Moreover, the scope of the present application is not intended to be limited to the particular embodiments of the apparatus, process, method or steps presently existing or to be developed later, that perform substantially the same function or achieve substantially the same result as the corresponding embodiments described herein may be utilized according to the present invention. Accordingly, the appended claims are intended to include within their scope such apparatuses, processes, methods or steps.

### Reference list

- S1 - S22: method steps
- SCP: service control point
- DB: data base
- STP: signaling transfer point
- HLR: home location register
- MSC: mobile switching center
- 1a - 6b: messages

## Claims

1. A method for trigger routing in a distributed mobile intelligent network service environment comprising the steps of:
providing of subscriber data comprising a subscription information data set (S2);
determining an availability of a service capability feature address in said subscription information data set (S3); mapping a mobile switching center address to an area identifier (S4), if no service capability feature address is available;
mapping said area identifier to a destination address (S5); inserting said destination address into said subscription information data set (S6); and
setting up an IN-trigger towards said destination address (S7).

2. The method of claim 1, wherein providing said subscriber data includes the reading of these data from the home location register (S2) or receiving these data via Mobile Application Part (S12, S13).

3. The method of claim 1 or 2, wherein said destination address is a gsmSCF_address of a respective service control point (SCP).

4. The method of any of claims 1 to 3, wherein said subscription information data set is an originating (O-CSI), a terminating (T-CSI) or visited terminating (VT-CSI) subscription information transferred between a home location register (HLR) and a respective mobile switching center.

5. The method of any of claims 1 to 4, wherein said mobile switching center address is a gateway or a serving mobile switching center address.

6. The method of any of claims 1 to 5, wherein a location information received from said mobile switching center address is used to determine said area identifier.

7. The method of any of claims 1 to 6, wherein said mobile intelligent network service environment is a CAMEL service environment.

8. An apparatus for trigger routing in a distributed mobile intelligent network service environment comprising:
means for determining the availability of a service capability feature address in a subscription information data set (CSI);
first mapping means for mapping a mobile switching center address to an area identifier, if no service capability feature address is available;
second mapping means for mapping said area identifier to a destination address; and
insertion means for inserting said destination address into said subscription information data set, wherein an IN-trigger is setup towards said destination address.

9. The apparatus of claim 8, wherein said apparatus is a home location register (HLR) for storing subscriber data comprising said subscription information data set or for receiving said subscriber data via Mobile Application Part.

10. The apparatus of claim 8 or 9, wherein said destination address is a gsmSCF_address of a respective service control point (SCP).

11. The apparatus of any of claims 8 to 10, wherein said subscription information data set is an originating (O-CSI), a terminating (T-CSI) or a visited terminating (VT-CSI) subscription information transferred between a home location register (HLR) and a respective mobile switching center.

12. The apparatus of any of claims 8 to 11, wherein said mobile switching center address is a gateway or a serving mobile switching center address.

13. The apparatus of any of claims 8 to 12, wherein a location information received from said mobile switching center address is used to determine said area identifier.

14. The apparatus of any of claims 8 to 13, wherein said mobile intelligent network service environment is a CAMEL service environment.

15. A computer program product having computer readable program code portions for performing the method steps according to any of claims 1 to 7.
